# EUROPEAN PATENT SPECIFICATION

(11) **EP 1 302 367 B1**
(45) Date of publication and mention of the grant of the patent: **21.12.2005**
(21) Application number: 02079234.7
(22) Date of filing: 11.10.2002
(51) Int. Cl.: B60R 9/04, B60R 9/058

(54) **Support for multipurpose carrying bars of motor cars**
Halter für Mehrzweckträger für Kraftfahrzeuge
Support multifonction pour des barres de support de véhicules à moteur

(30) Priority: 16.10.2001 IT MI20012140
(43) Date of publication of application: 16.04.2003
(73) Proprietor: CAM Costruzione Auto Accessori Milano S.R.L., 20123 Milano (IT)
(72) Inventor: Superti, Carlo, c/o CAM S.r.l., 20020 Lainate (MI) (IT)
(74) Representative: Raimondi, Margherita

(56) References cited:
- DE-A- 19 542 109
- US-A- 4 487 349
- US-A- 5 535 930

## Description

The present invention relates to a support for multipurpose carrying bars and the like to be fitted to the roof of motor cars.

It is known in the technical sector relating to the production of accessories for motor cars that there is the need to adapt the elements supporting multipurpose carrying bars, luggage racks, ski-racks and the like to the different forms and dimensions of the roofs of different makes of motor car.

It is also known that many of the most recent makes of motor car have longitudinal channels which are arranged in the region of the roof surface and are provided internally with suitable threaded holes for engagement with screws for fixing said elements supporting the multipurpose carrying bars. The prior art according to the preamble of claim 1 is disclosed in US-4,487,349.

Since said channels are covered by sections having, formed in them, seats for inserting the support elements, the technical problem which is posed is that of designing the latter so that they can be easily adapted to any form and length of seat of the section as well as any number and interaxial distance of the threaded holes provided for fixing the feet to the roof.

Within the scope of this problem a further requirement is that the support elements should be standardized as far as possible so that they can be produced using a limited number of moulds and that they can be easily assembled and are inexpensive to install and maintain. These technical problems are solved according to the present invention by a support for multipurpose carrying bars to be fitted to the roof of motor cars, according to claim 1.

Further details may be obtained from the following description of a non-limiting example of embodiment of the invention provided with reference to the accompanying drawings in which:
Figure 1 shows an exploded view of a support element according to the present invention;
Figure 2 shows a schematic section, along a vertical plane, of a first embodiment of the support according to Fig. 1; and
Figure 3 shows a schematic section, along a vertical plane, of a second embodiment of the support according to Fig. 1.

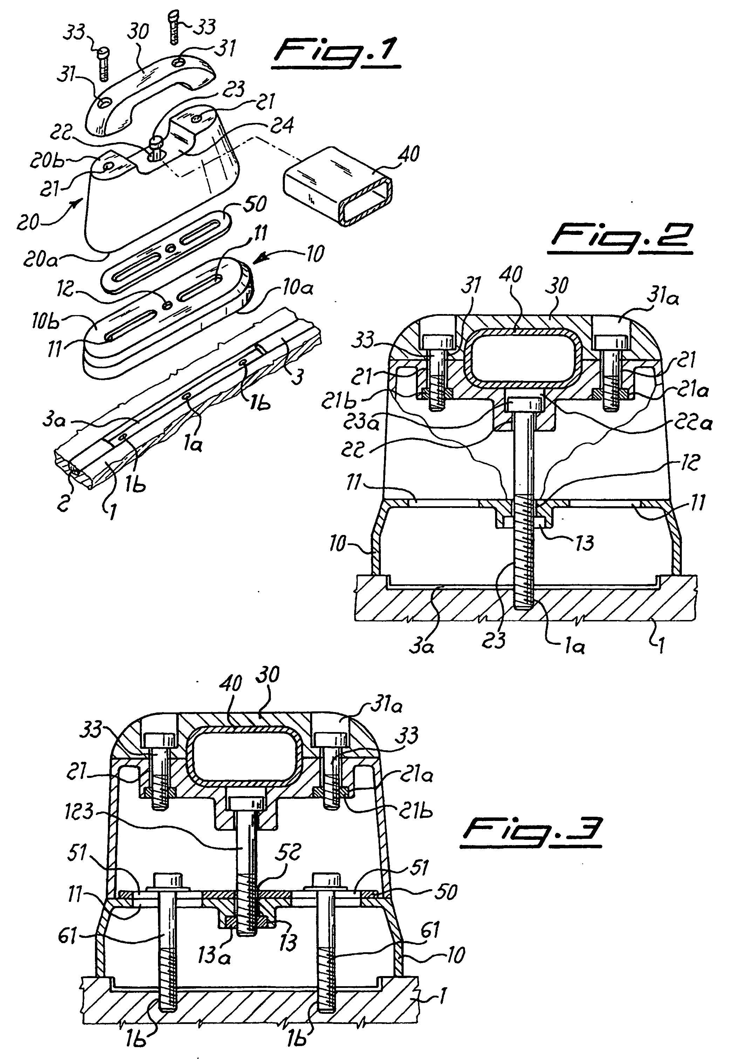

As illustrated in Fig. 1, the surface of the roof 1 of a motor car is provided with a channel 2 covered by a section 3 which, along its longitudinal extension, has two open seats 3a in the zone of the roof 1 where either a single central hole 1a or a pair of holes 1b arranged at a predefined relative distance are formed. Correspondingly a support element for multipurpose carrying bars and the like is substantially composed of a base 10 for resting on the roof 1, a column 20 which can be positioned on top of said base 10 and is able to support a bar 40, and a cover 30 for locking the said bar 40.

In greater detail, the base 10 has a bottom surface 10a shaped according to the form of the seat 2 inside which it must be inserted and partially wedged and an upper surface 10b having a standardized shape and dimensions so as to allow perfect mating with the bottom surface 20a of the column 20, which surface may thus in turn be standardized.

Similarly it is possible to standardize also the upper surface 20b of the column 20 where a suitable central seat 24 is also formed for partially containing the bar 40. The said base 10 also has two eyelets 11 extending in the longitudinal direction and arranged symmetrically with respect to a central through-hole 12 underneath which there is provided a housing 13 (Fig. 3) for a nut 13a, or similar nut screw, the function of which will become apparent below.

The column 20 in turn has two lateral holes 21 arranged symmetrically with respect to a central through-hole 22 which is coaxial with the hole 12 in the base 10 and through which a screw 23 can pass, the head 23a of said screw entering in a concealed manner inside an associated seat 22a.

The two lateral holes 21 are provided with respective housings 21a for containing a nut 21b able to be coupled with respective screws 33 for locking the cover 30 in turn provided with seats 31a for inserting said screws 33.

In the case where the roof 1 of the motor car has only a central hole 1a (Fig. 2), assembly of the support element is performed as follows:
- the base 10 is wedged inside the associated seat 3a of the section 3, arranging the central hole 12 in alignment with the hole 1a in the roof;
- the column 20 is positioned on top of the base 10 so that the central hole 22 is coaxial with the hole 12;
- the screw 23 is inserted inside the associated hole 22: in this configuration the screw 23 is sufficiently long that it can be screwed into the female thread of the hole 1a in the roof, causing tightening and locking of the base 10/column 20 assembly;
- the bar 40 is arranged in position, resting it inside the respective seat 24;
- the locking cover 30 is applied by inserting the screws 33 inside the associated holes 31 and tightening the nuts 21a thereof.

If the roof 1 of the car, on the other hand, has two holes 1b of predetermined interaxial distance for each seat 3a (Fig. 3), assembly of the support is performed as follows:
- the base 10 is wedged inside the associated seat 3a of the section 3, arranging the eyelets 11 in a position approximately centred with the two holes 21b;
- the base 10 is fixed to the roof 1 by tightening the respective screws 61 inside the said holes 1b;
- the column 20 is placed on top of the base 10 so that the central hole 22 is coaxial with the hole 12;
- the screw 123 is inserted inside the associated hole 22; in this configuration the screw 123 is long enough to be able to be screwed onto the nut 13a located underneath the hole 12, resulting in tightening and locking of the base 10/column 20 assembly;
- the bar 40 is arranged in position, resting it inside the respective seat 24;
- the locking cover 30 is fitted, inserting the screws 33 inside the associated holes 31 and tightening the nuts 21b thereof.

As shown in Fig. 3, in a preferred embodiment of the support, it is envisaged arranging a metal plate 50 between the base 10 and the column 20 so that the pulling force exerted on the base by the screws 61 is transmitted onto said plate instead of onto the upper surface 10b of the base 10 which may thus be conveniently made of plastic.

Suitably the metal plate 50 has eyelets 51 arranged symmetrically with respect to a central hole 52 for centring the plate itself with respect to the base 10 and the column 20.

Although not shown, a similar solution may also be envisaged for the assembly according to Fig. 1.

It can therefore be seen from the description provided how the support according to the invention allows a high degree of standardization of parts to be achieved since the only part which must be adapted to the particular configuration of the car roof consists solely of the bottom surface 10a of the base 10.

In the case of mass production such as that which may be envisaged for these supports, this means major savings in production costs resulting from the possibility of being able to vary only the bottom part of the mould for the base, while the other moulds may remain unchanged.

This is also the case should it be required to make a distinction between left-hand or right-hand supports depending on the configuration of the car roof.

In the method of assembly illustrated in Fig. 2 involving a single central screw, the support also has the advantage of allowing rotations of the column 20 relative to the base 10 with adjustment of any misalignment of the holes in the roof 1 of the car; this allows more correct alignment with the support arranged on the opposite side of the roof 1 and therefore improved centring of the bar.

## Claims

1. Support for multipurpose carrying bars to be fitted to the roof (1,1a;1,1b) of motor cars, comprising a base (10) for resting on the roof (1), a column (20) which can be positioned on top of said base (10) and is able to support a bar (40), as well as fastening means (23;61,123) acting in a direction perpendicular to the roof (1), for locking the column (20) and the base (10) to the latter, said base (10) also having two eyelets (11) arranged in the longitudinal direction and symmetrically with respect to a central through-hole (12), **characterized in that** it comprises a cover (30) for locking the bar (40),and **in that** said column (20) has two lateral holes (21) arranged symmetrically with respect to a central through-hole (22) which is coaxial with the hole (12) of the base (10), and **in that** the two lateral holes (21) are provided with respective housings (21a) for containing a nut (21b) suitable for coupling with respective screws (33) for locking the cover (30).

2. Support according to Claim 1, **characterized in that** said base (10) has a bottom surface (10a) shaped according to the form of the seat (2) of the roof (1) inside which it must be inserted and partially wedged.

3. Support according to Claim 1, **characterized in that** the upper surface (20b) of the column (20) has a central seat (24) for partially containing the bar (40).

4. Support according to Claim 1, **characterized in that** it comprises single means (23) for fastening in the perpendicular direction the column (20) and the base (10) to the roof.

5. Support according to Claim 4, **characterized in that** said fastening means consist of a screw (23) inserted in said central hole (22) of the column (20) and central hole (12) of the base (10), the head (23a) of said screw entering in a concealed manner inside an associated seat (22a) of the column (20) and the threading thereof engaging with the female thread of the hole (1a) in the roof (1) of the motor car.

6. Support according to Claim 1, **characterized in that** it comprises first means (61) for fastening the base (10) to the roof (1) and second means (123) for fastening the column (20) to the base (10).

7. Support according to Claim 6, **characterized in that** a housing (13) for a nut (13a) able to be coupled with said second fastening means (123) is provided underneath said central hole (12) of the base (10).

8. Support according to Claim 1, **characterized in that** it comprises a metal plate (50) arranged between the base (10) and the column (20).

9. Support according to Claim 8, **characterized in that** said metal plate (50) has eyelets (51) arranged symmetrically with respect to a central hole (52), for centring the said plate with respect to the base (10) and the column (20).

## Patentansprüche

1. Halter für am Dach (1, 1a; 1, 1b) von Kraftfahrzeugen anzubringende Mehrzweckträger, der eine Basis (10) zur Abstützung auf dem Dach (1), einen Ständer (20), der auf der Basis (10) positioniert werden und einen Träger (40) stützen kann, und in einer senkrecht zum Dach (1) verlaufenden Richtung wirkende Befestigungsmittel (23; 61, 123) umfasst, um den Ständer (20) und die Basis (10) mit dem Dach zu verriegeln, wobei die Basis (10) auch zwei in Längsrichtung und symmetrisch zu einem mittleren Loch (12) angeordnete Ösen (11) aufweist, **dadurch gekennzeichnet, dass** sie eine Abdeckung (30) zur Verriegelung des Trägers (40) aufweist, dass der Ständer (20) zwei seitliche Löcher (21) hat, die symmetrisch zu einem mittleren Loch (22) angeordnet sind, das zu dem Loch (12) in der Basis (10) koaxial ist, und dass die beiden seitlichen Löcher (21) mit jeweiligen Gehäusen (21a) für eine Mutter (21b) versehen sind, die zur Verriegelung der Abdeckung (30) zur Koppelung mit jeweiligen Schrauben (33) geeignet ist.

2. Halter nach Anspruch 1, **dadurch gekennzeichnet, dass** die Basis (10) eine Bodenfläche (10a) hat, deren Form der Form der Aufnahme (2) des Dachs (1) entspricht, in die sie eingeführt und teilweise festgeklemmt werden muss.

3. Halterung nach Anspruch 1, **dadurch gekennzeichnet, dass** die obere Fläche (20b) des Ständers (20) eine mittlere Aufnahme (24) hat, in der der Träger (40) teilweise aufgenommen wird.

4. Halterung nach Anspruch 1, **dadurch gekennzeichnet, dass** sie einzelne Mittel (23) umfasst, um den Ständer (20) und die Basis (10) in senkrechter Richtung am Dach zu befestigen.

5. Halterung nach Anspruch 4, **dadurch gekennzeichnet, dass** die Befestigungsmittel aus einer in das mittlere Loch (22) des Ständers (20) und das mittlere Loch (12) der Basis (10) eingeführten Schraube (23) bestehen, wobei der Kopf (23a) der Schraube verdeckt in eine zugeordnete Aufnahme (22a) des Ständers (20) eintritt und ihr Gewinde in das Aufnahmegewinde des Lochs (1a) im Dach (1) des Kraftfahrzeugs eingreift.

6. Halterung nach Anspruch 1, **dadurch gekennzeichnet, dass** sie erste Mittel (61) zum Befestigen der Basis (10) am Dach (1) und zweite Mittel (123) zum Befestigen des Ständers (20) an der Basis (10) umfasst.

7. Halterung nach Anspruch 6, **dadurch gekennzeichnet, dass** ein Gehäuse (13) für eine Mutter (13a), die an das zweite Befestigungsmittel (123) gekoppelt werden kann, unter dem mittleren Loch (12) der Basis (10) vorgesehen ist.

8. Halterung nach Anspruch 1, **dadurch gekennzeichnet, dass** sie eine zwischen der Basis (10) und dem Ständer (20) angeordnete Metallplatte (50) umfasst.

9. Halterung nach Anspruch 8, **dadurch gekennzeichnet, dass** die Metallplatte (50) symmetrisch zu dem mittleren Loch (52) angeordnete Ösen (51) hat, um die Platte in Bezug auf die Basis (10) und den Ständer (20) zu zentrieren.

## Revendications

1. Support pour barres de support polyvalentes à fixer sur le toit (1, la ; 1, 1b) d'automobiles, comprenant une base (10) destinée à prendre appui sur le toit (1), une colonne (20) qui peut être placée sur le dessus de ladite base (10) et est apte à supporter une barre (40) ainsi que des moyens de fixation (23 ; 61, 123) agissant dans une direction perpendiculaire au toit (1), destinés à bloquer la colonne (20) et la base (10) sur celui-ci, ladite base (10) possédant aussi deux boutonnières (11) ménagés dans la direction longitudinale et de manière symétrique par rapport à un trou traversant central (12), ***caractérisé en ce qu'il*** comprend un cache (30) pour bloquer la barre (40) et ***en ce que*** ladite colonne (20) possède deux trous latéraux (21) agencés de manière symétrique par rapport à un trou traversant central (22) qui est coaxial avec le trou (12) de la base (10), et ***en ce que*** les deux trous latéraux (21) sont munis de logements respectifs (21a) destinés à contenir un écrou (21b) adapté à un couplage avec des vis correspondantes (33) pour bloquer le cache (30).

2. Support selon la revendication 1, ***caractérisé en ce que*** ladite base (10) possède une surface inférieure (10a) conformée selon la forme du creux (2) du toit (1) à l'intérieur duquel elle doit être insérée et partiellement clavetée.

3. Support selon la revendication 1, ***caractérisé en ce que*** la surface supérieure (20b) de la colonne (20) possède un siège central (24) destiné à contenir en partie la barre (40).

4. Support selon la revendication 1, ***caractérisé en ce qu'il*** comprend un moyen unique (23) de fixation dans la direction perpendiculaire de la colonne (20) et de la base (10) au toit.

5. Support selon la revendication 4, ***caractérisé en ce que*** ledit moyen de fixation est constitué par une vis (23) insérée dans ledit trou central (22) de la colonne (20) et le trou central (12) de la base (10), la tête (23a) de ladite vis entrant de manière encastrée à l'intérieur d'un siège associé (22a) de la colonne (20) et son filetage s'engageant avec le filet femelle du trou (1a) pratiqué dans le toit (1) de l'automobile.

6. Support selon la revendication 1, ***caractérisé en ce qu'il*** comprend un premier moyen (61) pour fixer la base (10) au toit (1) et un deuxième moyen (123) pour fixer la colonne (20) à la base (10).

7. Support selon la revendication 6, ***caractérisé en ce qu'**un* logement (13) pour un boulon (13a) apte à être associé audit deuxième moyen (123) de fixation est ménagé sous ledit trou central (12) de la base (10).

8. Support selon la revendication 1, ***caractérisé en ce qu'il*** comprend une plaque métallique (50) placée entre la base (10) et la colonne (20).

9. Support selon la revendication 8, ***caractérisé en ce que*** ladite plaque métallique (50) possède des boutonnières (51) ménagées de manière symétrique par rapport à un trou central (52), pour centrer ladite plaque par rapport à la base (10) et à la colonne (20).
